# EUROPEAN PATENT APPLICATION

(11) **EP 1 761 059 A2**
(43) Date of publication of application: **07.03.2007**
(21) Application number: 06119585.5
(22) Date of filing: 25.08.2006
(51) Int. Cl.: H04N 7/24

(54) **Method and apparatus for transmitting and receiving broadcast data and service information**

(30) Priority: 29.08.2005 KR 20050079446
(71) Applicant: Samsung Electronics Co., Ltd., Suwon-si 442-742 Gyeonggi-Do (KR)
(72) Inventor: Park, Jeong-hoon, Seoul (KR)
(74) Representative: Robinson, Ian Michael

(57) **Abstract**

Provided are a method and apparatus for transmitting and receiving broadcast and communication combined service information. The method of receiving broadcast and communication combined service information includes receiving a broadcast signal comprising receiving control information for communication service information to be serviced in association with broadcast service information to be broadcast at a specific instant of time, and broadcast service information to be broadcast before the specific instant of time; analyzing the receiving control information and requesting and receiving communication service information corresponding to the analysis result; and receiving a broadcast signal including the broadcast service information to be broadcast at the specific instant of time, synchronizing the received broadcast service information with the received communication service information, and displaying the synchronized result. Accordingly, it is possible to provide a broadcast and communication combined service by displaying previously received communication service information in synchronization with broadcast service information.

## Description

Apparatuses and methods consistent with the present invention relate to transmitting and receiving broadcast and communication combined service information.

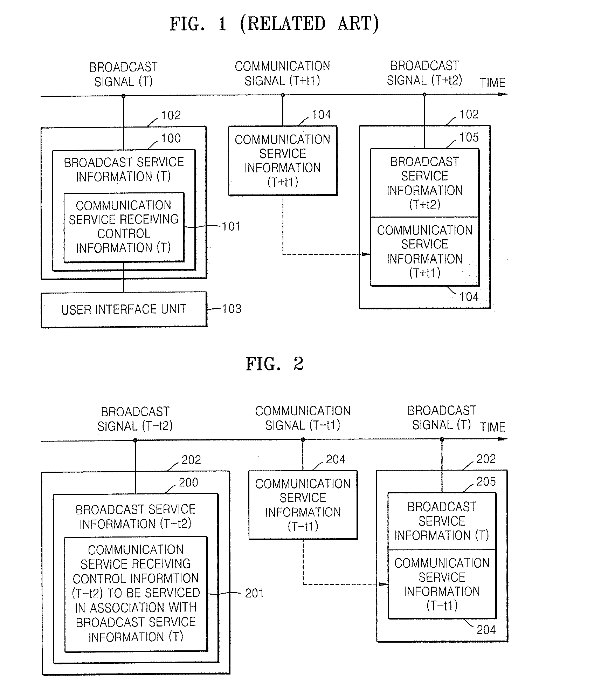

Figure 1 is a timing diagram for illustrating a conventional method of providing broadcast and communication combined service information. Referring to Figure 1, a broadcast signal supplied to an apparatus that receives broadcast and communication combined service information at a specific instant of time T, contains broadcast service information 100, and communication service receiving control information 101.

The apparatus processes the broadcast signal, which is received at the specific instant of time T, and displays the broadcast service information 100 and the communication service receiving control information 101 on a display unit 102 as illustrated in Figure 1.

A user selects the communication service receiving control information 101 displayed on the display unit 102 via a user interface unit 103, and requests a server that provides communication service information ("the server") (not shown) to transmit communication service information 104. Then the apparatus receives the communication service information 104 from the server. Here, the apparatus transmits a signal requesting the communication service information 104 and the server transmits the communication service information 104, both via a predetermined communication network, respectively.

The apparatus receives a communication signal from the server at an instant of time T+t1 delayed by a predetermined amount of time t1 from the specific instant of time T. The communication signal contains the communication service information 104 that the apparatus requests.

The apparatus receives the communication service information 104, and then receives a broadcast signal transmitted at an instant of time T+t2 delayed by a predetermined amount of time t2 from the specific instant of time T. Then, as illustrated in Figure 1, the apparatus displays broadcast service information 105 received at the instant of time T+t2 and the communication service information 104 received at the instant of time T+t1 together on the display unit 102. Here, the communication service information 104 displayed together with the broadcast service information 105 is related to the broadcast service information 100 that was received at the specific instant of time T.

That is, communication service information to be provided in association with broadcast service information is not provided until a user requests it via the user interface unit 103, thereby causing a delay corresponding to the predetermined amount of time t2 in Figure 1.

Also, communication service information is received, processed, and displayed on the display unit 102 only after a considerable amount of time. Accordingly, communication service information that is not related to broadcast service information that is currently being broadcast is likely to be displayed, thereby interrupting a user's viewing of the current broadcast service information.

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Preferred features of the invention will be apparent from the dependent claims, and the description which follows.

The present invention concerns transmitting and receiving broadcast and communication combined service information by synchronizing broadcast service information provided at a specific instant of time with communication service information provided before the specific instant of time and displaying the synchronized result in order to provide a broadcast and communication combined service.

The present invention provides a method and apparatus for receiving broadcast and communication combined service information, in which a broadcast and communication combined service is provided by receiving a broadcast signal containing receiving control information, for communication service information to be provided in association with broadcast service information to be broadcast at a specific instant of time, and broadcast service information to be broadcast before the specific instant of time; receiving a corresponding communication service by using the receiving control information; and displaying the received communication service together with the broadcast service information to be broadcast at the specific instant of time.

According to an aspect of the present invention, there is provided a method of transmitting broadcast and communication combined service information, the method comprising (a) generating a broadcast service stream containing receiving control information, for a communication service to be serviced in association with broadcast service information which is to be broadcast at a predetermined instant of time, together with broadcast service information to be broadcast before the predetermined instant of time; (b) generating broadcast service configuration information containing a message indicating that the generated broadcast service stream provides a broadcast and communication combined service; and (c) multiplexing the generated broadcast service stream and the generated broadcast service configuration information into a broadcast signal, and transmitting the broadcast signal.

According to another aspect of the present invention, there is provided a method of receiving broadcast and communication combined service information, the method comprising (a) receiving a broadcast signal containing receiving control information, for a communication service to be serviced in association with broadcast service information which is to be broadcast at a predetermined instant of time, together with broadcast service information to be broadcast before the predetermined instant of time; (b) analyzing the receiving control information for the communication service, which is contained in the received broadcast signal, and requesting and receiving communication service information corresponding to the analysis result; and (c) receiving a broadcast signal containing the broadcast service information to be broadcast at the predetermined instant of time, synchronizing the received broadcast service information, which is to be broadcast at the predetermined instant of time, with the communication service information received in (b), and displaying the synchronized result.

According to an aspect of the present invention, there is provided a method of receiving broadcast and communication combined service information, the method comprising (a) receiving a broadcast signal containing an additional broadcast service, which is to be serviced in association with broadcast service information which is to be broadcast at a specific instant of time, together with broadcast service information to be broadcast before the specific instant of time; and (b) receiving a broadcast signal containing the broadcast service information to be broadcast at the specific instant of time, synchronizing the broadcast service information, which is to be broadcast at the specific instant of time, with the additional broadcast service information, and displaying the synchronized result.

According to an aspect of the present invention, there is provided an apparatus for transmitting broadcast and communication combined service information, the apparatus comprising a broadcast service stream processor generating a broadcast service stream containing receiving control information, for communication service information to be serviced in association with broadcast service information which is to be broadcast at a specific instant of time, together with broadcast service information to be broadcast before the specific instant of time; a broadcast service configuration information processor generating broadcast service configuration information indicating that the generated broadcast service stream provides a broadcast and communication combined service; and a multiplexer multiplexing the broadcast service stream and the broadcast service configuration information into a broadcast signal.

According to an aspect of the present invention, there is provided an apparatus for receiving broadcast and communication combined service information, the apparatus comprising a receiver receiving a first broadcast signal and a second broadcast signal, where the first broadcast signal contains receiving control information, for communication service information to be serviced in association with broadcast service information which is to be broadcast at a specific instant of time, and broadcast service information to be broadcast before the specific instant of time, and the second broadcast signal contains the broadcast service information to be broadcast at the specific instant of time; a broadcast service stream processor broadcast signal-processing the first and second broadcast signals, where broadcast service information and communication service receiving control information are extracted from the first broadcast signal; a communication service receiving control information processor analyzing the communication service receiving control information received from the broadcast service stream processor, and receiving communication service information corresponding to the analysis result; and a display unit receiving the broadcast service information, which is to be broadcast at the specific instant of time, from the broadcast service stream processor, synchronizing the received broadcast service information with communication service information received from the communication service receiving control information processor, and displaying the synchronized result.

According to another aspect of the present invention, there is provided a computer readable recording medium having recorded thereon a computer program for executing a method of transmitting broadcast and communication combined service information.

According to another aspect of the present invention, there is provided a computer readable recording medium having recorded thereon a computer program for executing a method of receiving broadcast and communication combined service information.

The above and other aspects of the present invention will become more apparent by describing in detail exemplary embodiments thereof with reference to the attached drawings, in which:
Figure 1 is a timing diagram for illustrating a conventional method of providing broadcast and communication combined service information;
Figure 2 is a timing diagram for illustrating a method of providing a broadcast and communication combined service according to an exemplary embodiment of the present invention;
Figure 3 is a timing diagram for illustrating a method of providing a broadcast and communication combined service according to another exemplary embodiment of the present invention;
Figure 4 is a timing diagram for illustrating a method of providing a broadcast and communication combined service according to another exemplary embodiment of the present invention;
Figure 5 is a block diagram of an apparatus for transmitting broadcast and communication combined service information according to an exemplary embodiment of the present invention;
Figure 6 is a block diagram of an apparatus for receiving broadcast and communication combined service information according to an exemplary embodiment of the present invention;
Figure 7 is a block diagram of a system for providing a broadcast and communication combined service when the apparatus illustrated in Figure 6 is moving, according to an exemplary embodiment of the present invention;
Figure 8 is a flowchart illustrating a method of transmitting broadcast and communication combined service information according to an exemplary embodiment of the present invention; and
Figures 9A and 9B are flowcharts illustrating a method of receiving broadcast and communication combined service information according to an exemplary embodiment of the present invention.

Hereinafter, exemplary embodiments of the present invention will be described in detail with reference to the accompanying drawings.

Figure 2 is a timing diagram for illustrating a method of providing a broadcast and communication combined service according to an exemplary embodiment of the present invention. Referring to Figure 2, an apparatus that receives broadcast and communication combined service information is capable of receiving at least one broadcast signal and at least one communication signal.

A broadcast signal, which is to be supplied to the apparatus at a specific instant of time T-t2, contains broadcast service information 200 to be provided at the specific instant of time T-t2, and communication service receiving control information 201 for communication service information 204 to be serviced in association with broadcast service information 205 to be received at a specific instant of time T.

The apparatus processes the broadcast signal received at the specific instant of time T-t2 and displays the broadcast service information 200 on a display unit 202 as illustrated in Figure 2. Also, the apparatus analyzes the communication service receiving control information 201 contained in the broadcast signal received at the specific instant of time T-t2, and requests a communication service information providing server (not shown) corresponding to the analysis result to send the communication service information 204 to be provided along with the broadcast service information 205 received at the specific instant of time T.

The apparatus receives a communication signal from the server at an instant of time T-t1 delayed by a predetermined time from the instant of time T-t2 after requesting transmission of the communication service information 204. The communication signal contains the communication service information 204 requested at the instant of time T-t2.

The apparatus receives a broadcast signal a predetermined time after receiving the communication service information 204, i.e., at the instant of time T, via a broadcast network. Also, the apparatus processes the broadcast signal received at the instant of time T, and displays the broadcast service information 205 received at the instant of time T and the communication service information 204 received at the instant of time T-t1 together on the display unit 202, as illustrated in Figure 2.

Therefore, it is possible to simultaneously process the broadcast service information 205 and the communication service information 204 and display them on the display unit 202 at the instant of time T. Here, the displayed communication service information 204 is related to the broadcast service information 205 received and displayed at the instant of time T.

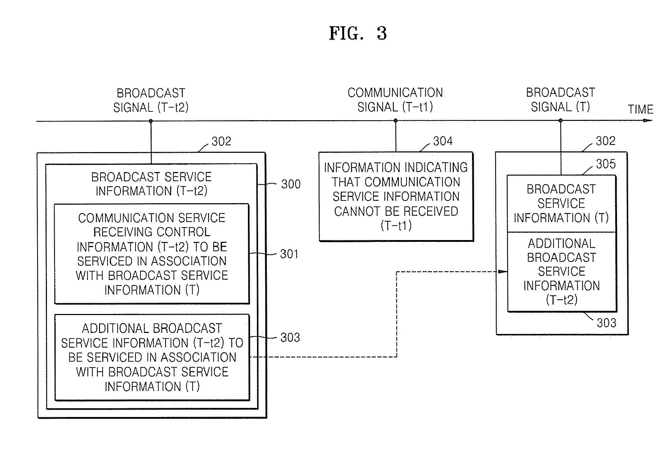

Figure 3 is a timing diagram for illustrating a method of providing a broadcast and communication combined service according to another exemplary embodiment of the present invention. Referring to Figure 3, an apparatus that receives broadcast and communication combined service information is capable of receiving at least one broadcast signal and at least one communication signal.

A broadcast signal transmitted to the apparatus at a specific instant of time T-t2 contains broadcast service information 300 to be provided at the instant of time T-t2, communication service receiving control information 301 for communication service information to be serviced in association with broadcast service information 305 to be received at a specific instant of time T, and additional broadcast service information 303 to be serviced in association with broadcast service information 305 to be received at the instant of time T.

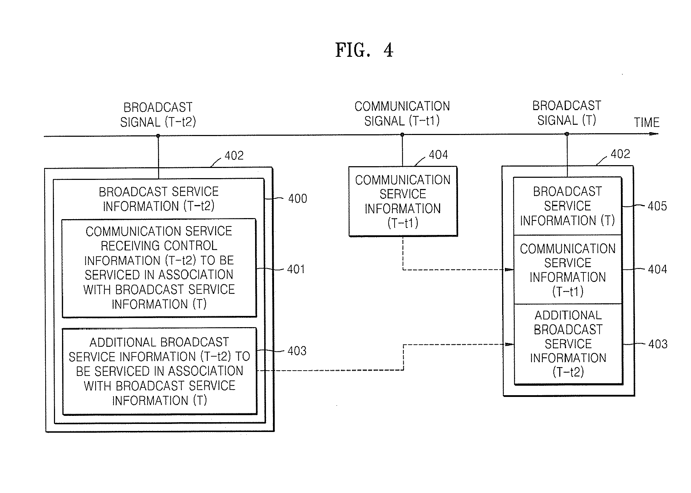

Here, the additional broadcast service information 303 is displayed together with broadcast service information 305 at the instant of time T when a communication environment does not allow the communication service information to be received. Alternatively, the additional broadcast service information 303 may contain additional information to be displayed together with the communication service information when receiving the communication service information (a detailed description thereof will later be described in detail with reference to Figure 4).

The apparatus processes the broadcast signal received at the instant of time T-t2 and displays the broadcast service information 300 on a display unit 302 as illustrated in Figure 3. Also, the apparatus analyzes the communication service receiving control information 301 contained in the broadcast signal received at the instant of time T-t2, and requests a communication service information providing server (not shown) corresponding to the analysis result to transmit the communication service information to be provided together with the broadcast service information 305 received at the instant of time T.

The apparatus receives a communication signal that contains, instead of communication service information, information indicating that communication service information cannot be received 304, after a predetermined amount of time, i.e., at a specific instant of time T-t1. The communication signal is generated and transmitted to the apparatus when a communication environment does not allow the communication service information to be received.

The apparatus receives a broadcast signal via a broadcast network a predetermined amount of time after receiving the communication signal, i.e., at the instant of time T. Also, the apparatus processes the broadcast signal received at the instant of time T, and displays the broadcast service information 305 received at the instant of time T and the additional broadcast service information 303 together on the display unit 302 at the instant of time T, as illustrated in Figure 3. Here, since the apparatus receives the communication signal at the instant of time T-t1, the apparatus does not display the communication service information at the instant of time T.

Therefore, it is possible to simultaneously process the broadcast service information 305 and the additional broadcast service information 303 and display them on the display unit 302. Here, the displayed additional broadcast service information 303 is related to the broadcast service information 305 received and displayed at the instant of time T.

Figure 4 is a timing diagram for illustrating a method of providing a broadcast and communication combined service according to another exemplary embodiment of the present invention. Referring to Figure 4, an apparatus that receives broadcast and communication combined service information is capable of receiving at least one broadcast signal and at least one communication signal.

A broadcast signal supplied to the apparatus at a specific instant of time T-t2 contains broadcast service information 400 to be provided at the instant of time T-t2, communication service receiving control information 401 for communication service information 404 to be serviced in association with broadcast service information 405 to be received at a specific instant of time T, and additional broadcast service information 403 to be serviced in association with broadcast service information 405 to be received at the instant of time T.

The apparatus processes the broadcast signal received at the instant of time T-t2 and displays the broadcast service information 400 on a display unit 402 as illustrated in Figure 4. Also, the apparatus analyzes the communication service receiving control information 401 contained in the broadcast signal received at the instant of time T-t2, and requests a communication service information providing server (not shown) corresponding to the analysis result to transmit the communication service information 404 to be provided at the instant of time T.

The apparatus receives a communication signal from the server a predetermined amount of time after the instant of time T-t2, i.e., at the instant of time T-t1. The communication signal contains the requested communication service information 404.

The apparatus receives the communication service information 404 and then receives a broadcast signal after a predetermined amount of time, i.e., at the instant of time T via a broadcast network. Also, the apparatus processes the broadcast signal at the instant of time T, and displays broadcast service information 405 received at the instant of time T, the communication service information 404 received at the instant of time T-t1, and the additional broadcast service information 403 received at the instant of time T-t2 together on the display unit 402, as illustrated in Figure 4.

Accordingly, it is possible to simultaneously process the broadcast service information 405, the communication service information 404, and the additional broadcast service information 403, and display them on the display unit 402. Here, the displayed communication service information 404 and additional broadcast service information 403 are related to the broadcast service information 405 received and displayed at the instant of time T.

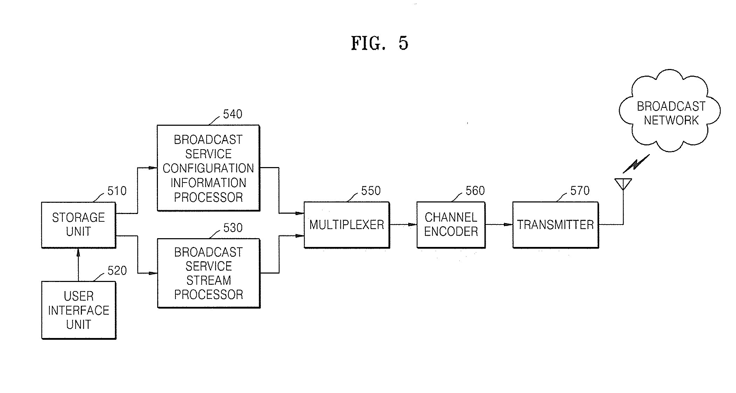

Figure 5 is a block diagram of an apparatus that transmits broadcast and communication combined service information ("the transmitting apparatus") according to an exemplary embodiment of the present invention. The construction of the transmitting apparatus that provides broadcast and communication combined service information in order to execute a broadcast and communication combined service will now be descried with reference to Figure 5.

The transmitting apparatus includes a storage unit 510, a user interface unit 520, a broadcast service stream processor 530, a broadcast service configuration information processor 540, a multiplexer 550, a channel encoder 560, and a transmitter 570.

Examples of a broadcast service include digital broadcast services, such as Digital Audio Broadcasting (DAB), Digital Video Broadcasting (DVB), Advanced Television System Committee (ATSC) broadcasting, and Integrated Service Digital Broadcasting-Terrestrial (ISDB-T). Examples of a communication service include digital communication services, such as Code Division Multiple Access (CDMA), Wideband Code Division Multiple Access (WCDMA), Global System for Mobile (GSM), General Packet Radio Service (GPRS), High Speed Downlink Packet Access (HSDPA), Wireless Broadband Internet (WiBro), and Worldwide Interoperability for Microwave Access (WiMax).

The storage unit 510 stores broadcast service information and communication service receiving control information for communication service information to be provided in association with the broadcast service information.

Here, the broadcast service information and the communication service receiving control information are stored in the storage unit 510 so that the communication service receiving control information for the communication service information, which will be provided in association with broadcast service information to be provided at a specific instant of time T, is matched to broadcast service information to be broadcast at an instant of time T-t2 before the instant of time T. The reason why the broadcast service information and the communication service receiving control information are stored at different times is to allow a broadcast and communication combined service information receiving apparatus ("the receiving apparatus") (not shown) to receive the communication service information beforehand so that a combined service of broadcast service information and communication service information can be substantially provided without a delay at the instant of time T. Here, the time difference t2 indicates the time duration in which the transmitting apparatus receives and analyzes the receiving control information communication service, and receives corresponding communication service information from a communication service information providing server (not shown).

The storage unit 510 may further store broadcast service information to be broadcast at the instant of time T-t2 before the instant of time T, which is matched to additional broadcast service information to be broadcast at the instant of time T. Here, the additional broadcast service information is displayed together with the broadcast service information to be broadcast at the instant of time T, when desired communication service information is not provided from the server.

Further, the additional broadcast service information may be displayed together with the broadcast service information to be broadcast at the instant of time T and the communication service information even when desired communication service information is provided from the server.

Here, the storage unit 510 may be any storage medium, e.g., a hard disk drive (HDD) or an Electrically Erasable Programmable Read-Only Memory (EEPROM) but is preferably a large-capacity storage medium.

The user interface unit 520 provides an input/output (I/O) interface via which a command instructing whether to service a combination of the broadcast service information stored in the storage unit 510 and the corresponding communication service information is received from a user. Specifically, the user interface unit 520 may include an infra-red (IR) receiver for receiving a command via a keypad or an IR remote. The IR remote may be a wireless mouse, such as an air mouse, or a remote controller.

The broadcast service stream processor 530 receives the broadcast service information and the communication service receiving control information stored in the storage unit 510, and generates a broadcast service stream. Here, the broadcast service information is broadcast service information to be displayed at the instant of time T-t2, and the communication service receiving control information is control information for receiving communication service information to be serviced in association with the broadcast service information to be displayed at the instant of time T. As described above, the communication service receiving control information is provided in the form of a broadcast service stream, together with the broadcast service information to be broadcast a predetermined time (here, at the instant of time T-t2) before the broadcast service information to be broadcast at the instant of time T.

Also, the broadcast service stream processor 530 encodes broadcast service information and communication service receiving control information in a format of a broadcast service, transforms the encoded data into packets, and multiplexes the packetized broadcast service stream.

The broadcast service configuration information processor 540 constructs broadcast service configuration information that includes a message informing the receiving apparatus that a broadcast service being currently provided is a broadcast and communication combined service. In detail, the broadcast service configuration information is included in Fast Information Channel (FIC) in the case of Digital Audio Broadcasting (DAB), and Program Specific Information (PSI)/Service Information (SI) in the case of Digital Video Broadcasting-Terrestrial (DVB-T), so that the receiving apparatus can recognize that the current service is broadcast and communication combined service. The broadcast service configuration information that includes the message may be provided via an electronic program guide (EPG) or an electronic streaming guide (ESG).

The multiplexer 550 receives a signal-processed broadcast service stream from the broadcast service stream processor 530 and signal-processed broadcast service configuration information from the broadcast service configuration information processor 540, and multiplexes them into a broadcast signal.

The channel encoder 560 receives the multiplexed broadcast signal from the multiplexer 550 and channel-encodes it.

The transmitter 570 receives the channel-encoded broadcast signal from the channel encoder 560 and transmits it to the receiving apparatus via an antenna. The transmitter 570 is capable of transmitting at least one broadcast signal. Here, the transmitter 570 is connected to the receiving apparatus via a broadcast network.

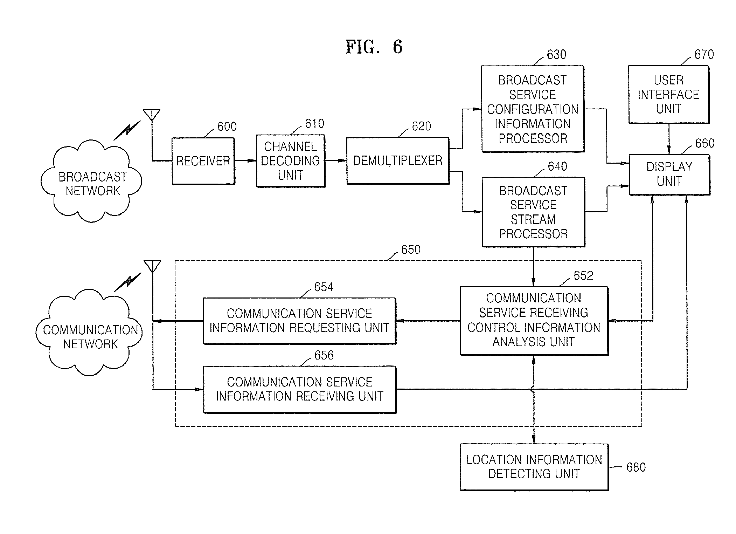

The receiving apparatus receiving the channel-encoded broadcast signal from the transmitter 570 may be a fixed type receiving apparatus, a hand-held type receiving apparatus, or a portable type receiving apparatus. The receiving apparatus will later be described in detail with reference to Figure 6.

The communication service receiving control information stored in the storage unit 510 needs to contain location information of a corresponding communication service information providing server (not shown) from which communication service information is received.

If the communication service information is a moving picture broadcast service that provides audio and video, the location information of the server is included in the communication service receiving control information by using a multimedia data presentation, such as Moving Pictures Expert Group (MPEG) MPEG-4 BIFS (Binary Format for Scene), SMIL Synchronized Multimedia Integration Language (SMIL), Light Application Scene Representation (LASeR).

If the communication service information is a service provided using the HyperText Markup Language (HTML) or the extensible Markup Language (XTML), the location information of the server is included in the communication service receiving control information by using a Uniform Resource Locator (URL). For example, the URL may be http://www.samsung.com.

Also, the communication service receiving control information may contain an identifier (ID) of a server providing communication service information. The ID of a server providing communication service information allows the server providing communication service information to be particularly designated. As described above, the ID of a server providing communication service information is additionally provided together with an URL, so that a plurality of servers providing communication service information can provide preferential communication service information. Table 1 shows a data construction of the communication service receiving control information containing an identifier of a server providing communication service information.

**Table 1**

| | |
|---|---|
| Identifier Field of Server Providing Communication Service Information | Location Information Field of Server Providing Communication Service Information |

If the communication service information is a service provided using an MPEG-2 Transport Stream (TS), the location information of the server is included in the communication service receiving control information by including a User Data Field (UDF).

If the communication service information is provided using an Internet Protocol (IP), the location information of the server is included in the communication service receiving control information by including the IP address.

In a broadcast and communication combined service according to another exemplary embodiment of the present invention, communication service information may be provided only when a user requests it, e.g., when the user makes an order for a product, confirms the order, or makes a reservation for the order. If communication service information is received and displayed without the user's request, it would interrupt the user's viewing of broadcast service information and incur additional expenses. Specifically, for example, it is possible for the communication service information to be received without the user's request when the communication service information is charged at a flat rate, and to be received only in response to a user's request when the communication service information is charged in units of packets.

Thus, communication service receiving control information according to an exemplary embodiment of the present invention may indicate whether communication service information can be received without a user's request or not. In this case, the location information of the server providing communication service information and a user request inputting field are incorporated into the communication service receiving control information. Table 2 shows a data construction of the communication service receiving control information containing a user request inputting field.

**Table 2**

| | |
|---|---|
| User Request Inputting Field | Location Information Field of Server Providing Communication Service Information |

Upon receiving communication service receiving control information which does not contain the user request inputting field shown in Table 2 or have the user request inputting field having a value of 0, the receiving apparatus can receive corresponding communication service information based on location information of a server providing communication service information. If the receiving apparatus receives communication service receiving control information containing the user request inputting field or the user request inputting field having a value of 1, the receiving apparatus can receive corresponding communication service information only in response to a user's request.

According to an exemplary embodiment of the present invention, a broadcast and communication combined service information receiving apparatus receives broadcast service information that can be provided via at least one broadcast network, and communication service information that can be provided via at least one broadcast network. Here, when communication service information is provided via at least one communication network, the receiving apparatus may be designed to receive the communication service information via a communication signal of the best quality.

Figure 6 is a block diagram of a broadcast and communication combined service information receiving apparatus ("the receiving apparatus") that receives broadcast and communication combined service information and provides a broadcast and communication combined service, according to an exemplary embodiment of the present invention.

Here, a broadcast service may be a digital broadcast service, such as DAB, DVB, ATSC, and ISDB-T, and a communication service may be a digital communication service, such as CDMA, WCDMA, GSM, GPRS, HSDPA, WiBro, and WiMax.

Referring to Figure 6, the receiving apparatus includes a receiver 600, a channel decoding unit 610, a demultiplexer 620, a broadcast service configuration information processor 630, a broadcast service stream processor 640, a communication service receiving control information processor 650, a display unit 660, a user interface unit 670, and a location information detecting unit 680.

The receiver 600 receives a broadcast signal from a broadcast and communication combined service information transmitting apparatus ("the transmitting apparatus") via a broadcast network. The received broadcast signal will later be described in greater detail with reference to Figure 6.

The channel decoding unit 610 channel-decodes the broadcast signal received via the receiver 600.

The demultiplexer 620 receives the channel-decoded broadcast signal from the channel decoding unit 610, and demultiplexes it into broadcast service configuration information and a broadcast service stream.

The broadcast service configuration information processor 630 receives and signal-processes the broadcast service configuration information from the demultiplexer 620. More specifically, the broadcast service configuration information processor 630 determines whether the broadcast service configuration information includes a message indicating whether a broadcast and communication combined service is provided. The broadcast service configuration information processor 630 may determine whether the broadcast service configuration information provides a broadcast and communication combined service, through FIC analysis in the case of DAB or through PSI/SI analysis in the case of DVB-T.

When it is determined that a broadcast and communication combined service is provided, the broadcast service configuration information processor 630 displays on the display unit 660 whether communication service information will be received and combined with broadcast service information to provide a broadcast and communication combined service, thereby allowing the user to select whether to receive and display the communication service information. Otherwise, when the receiving apparatus may be initially set to use communication service information as a default setting, the communication service information may be received and displayed without the user's selection.

The broadcast service stream processor 640 signal-processes the broadcast service stream received from the demultiplexer 620. Here, the broadcast service stream is signal-processed in a reverse manner in which the broadcast service stream processor 530 of the transmitting apparatus illustrated in Figure 5 performs signal processing. More specifically, the broadcast service stream is signal-processed by demultiplexing a packetized broadcast service stream into packets and decoding the packets in a predetermined format.

Through the above signal processing, the broadcast service stream processor 640 transmits broadcast service information to the display unit 660 and communication service receiving control information to the communication service receiving control information processor 650. Also, when additional broadcast service information is present, it is transmitted to the display unit 660.

The communication service receiving control information processor 650 includes a communication service receiving control information analysis unit 652, a communication service information requesting unit 654, and a communication service information receiving unit 656.

The communication service receiving control information analysis unit 652 analyzes communication service receiving control information received from the broadcast service stream processor 640.

In detail, when the communication service receiving control information includes a user request inputting field, the communication service receiving control information analysis unit 652 displays on the display unit 660 whether communication service information will be received. In this case, when a user's request to receive the communication service information is input via the user interface unit 670, the communication service receiving control information analysis unit 652 requests a server providing communication service information to provide the communication service information via the communication service information requesting unit 654.

If the communication service receiving control information does not include the user request inputting field, the communication service receiving control information analysis unit 652 requests communication service information directly via the communication service information requesting unit 654.

Also, the communication service receiving control information analysis unit 652 receives location information thereof detected by the location information detecting unit 680 when the communication service receiving control information includes a location-based service field. Further, the communication service receiving control information analysis unit 652 requests the server providing communication service information to send corresponding communication service information via the communication service information requesting unit 654 based on the location information thereof. In this case, communication service information received from the server providing communication service information is location-based communication service information.

The communication service information requesting unit 654 requests the server providing communication service information to transmit the corresponding communication service information.

The communication service information receiving unit 656 receives the communication service information contained in a communication signal transmitted from the server providing communication service information and provides it to the display unit 660. Also, when not receiving the communication service information from the server providing communication service information, the communication service information receiving unit 656 transmits a signal indicating that the communication service information cannot be received to the display unit 660.

The display unit 660 time-synchronizes the broadcast service information received from the broadcast service stream processor 640 with communication service information received from the communication service receiving control information analysis unit 652, and displays the synchronized result. When receiving the signal indicating that the communication service information cannot be received from the communication service receiving control information analysis unit 652, the display unit 660 displays only the broadcast service information or the additional broadcast service information, if any. Accordingly, it is possible to prevent a delay between the broadcast service information and the communication service information displayed on the display unit 660 (see Figures 2 through 4).

The user interface unit 670 provides an input/output (I/O) interface via which a selection whether to receive the communication service information is received from a user. More specifically, the user interface unit 670 may be constructed with an IR receiver for receiving a command via a keypad or an IR remote. The IR remote may be a wireless mouse, such as an air mouse, or a remote controller.

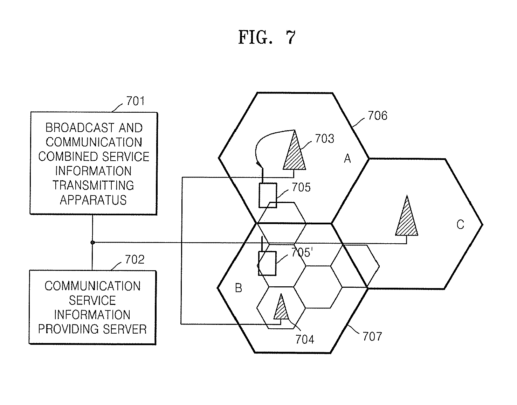

Figure 7 is a block diagram of a system that provides a broadcast and communication combined service to a broadcast/communication combined service information receiving apparatus that is moving, such as that illustrated in Figure 6, according to an exemplary embodiment of the present invention. Figure 7 illustrates a case where a mobile broadcast service, as a broadcast service, which allows a broadcast signal to be received without a reduction in signal strength or errors during movement, and a wireless communication service, as a communication service, which provides a communication signal, are combined together.

The system of Figure 7 includes a broadcast and communication combined service information transmitting apparatus 701 ("the transmitting apparatus 701"), a communication service information providing server 702 ("the server 702"), a broadcast repeater 703 that transmits broadcast data in units of regions, a communication base station 704, and a broadcast and communication combined service information receiving apparatus 705 ("the receiving apparatus 705") that provides a broadcast and communication combined service.

As an example of a case where a mobile broadcast service is combined with a wireless communication service for differentiation of the mobile broadcast service, a broadcast and communication combined service information receiving apparatus is capable of detecting information of a current location thereof via a base station or a repeater for additional transmission of a mobile broadcast service, which is one of the features of a wireless communication service, and thus, providing a more advanced location-based broadcast and communication combined service.

In general, in the case of a Single Frequency Network (SFN) method, a piece of broadcast service information is equally broadcast over all regions, and thus, communication service information to be serviced in association with broadcast service information which is to be broadcast at a specific instant of time is preferably constructed with only one piece of data.

Referring to Figure 7, the communication service receiving control information to be serviced in association with the broadcast service information that will be broadcast at the specific instant of time, that is, a case where the receiving apparatus 705 receives communication service receiving control information including a location-based service field, will now be described. For a location-based broadcast, the receiving apparatus 705 receives corresponding local communication service information based on communication service receiving control information and information regarding the location of the receiving apparatus 705 (an identifier of the broadcast repeater 703, an identifier of the communication base station 704, GPS information, etc.).

The receiving apparatus 705 receives a broadcast signal that contains receiving control information for the communication service to be serviced in association with the broadcast service information that will be broadcast at the specific instant of time, together with broadcast service information to be broadcast before the specific instant of time.

For example, the receiving control information may include a location-based service field indicating that currently received communication service information is location-based communication service information.

The receiving apparatus 705 detects information regarding its current location via the broadcast repeater 703, accesses the server 702 based on the detected location information to receive corresponding regional communication service information, synchronizes the received regional communication service information with the broadcast service information received at the instant of time, and displays the synchronized result.

The receiving apparatus 705 located in an A region 706 obtains information regarding its location via the broadcast repeater 703 and receives regional communication service information relating to the A region 706 from the server 702.

A receiving apparatus 705' located in a B region 707 obtains information regarding its location via the communication base station 704 and receives regional communication service information relating to the B region 707 from the server 702.

When the receiving apparatus 705 receives receiving control information for communication service information while moving from the A region 706 to the B region 707 or vice versa (when a handover occurs), it is possible to set the receiving apparatus 705 to receive the communication service information according to a predetermined method.

A case where the receiving apparatus 705 located in the A region 706 is moving to the B region 707 while receiving the communication service information relating to the A region 706 from the server 702 will now be described.

If sufficient time is not provided to receive the communication service information relating to the B region 707 when the communication service information relating to the A region 706 is to be serviced in association with currently received broadcast service information, the already obtained communication service information relating to the A region 706 is synchronized with the broadcast service information and the synchronized result is displayed. However, if sufficient time is provided in this case, the communication service information relating to the B region 707 is received and synchronized with the broadcast service information, and the synchronized result is displayed.

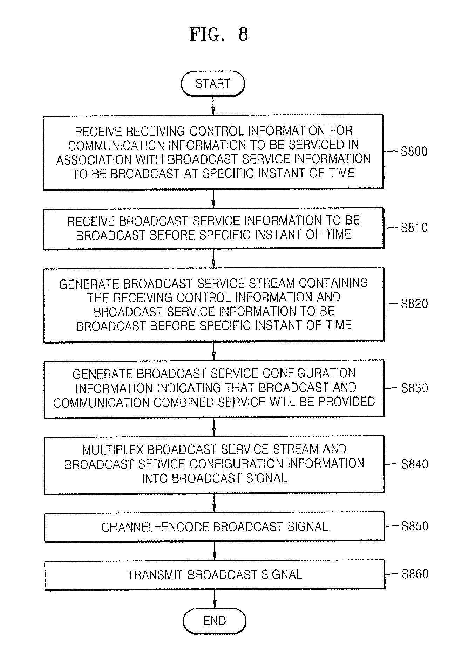

Figure 8 is a flowchart illustrating a method of transmitting a broadcast and communication combined service according to an exemplary embodiment of the present invention. In Figure 8, examples of broadcast service information and communication service information described include a moving picture broadcast that provides audio and video, audio/video streaming, a multimedia data file, a web service, traffic information, a news service, a stock service, an Electronic Program Guide (EPG), and an Electronic Services Guide (ESG).

Referring to Figure 8, first, receiving control information for communication service information to be serviced in association with broadcast service information that will be broadcast at a specific instant of time T, is received (S800).

Next, broadcast service information to be broadcast at an instant of time T-t2 earlier than the specific instant of time T is received (S810). The receiving control information and the broadcast service information are respectively input from a storage unit in operations S800 and S810. The receiving control information may contain a user request inputting field and/or a location-based service field.

Here, that the broadcast service information and the receiving control information are stored in the storage unit must be understood that the receiving control information for communication service information to be serviced in association with the broadcast service information that is to be broadcast at the specific instant of time T, is stored in synchronization with the broadcast service information to be broadcast at the instant of time T-t2.

The reason why the broadcast service information and the receiving control information for communication service information are stored at different times is to allow a broadcast and communication combined service information receiving apparatus ("the receiving apparatus") to receive the communication service information beforehand, thereby substantially providing a combined service of broadcast service information and communication service information without a delay at the specific instant of time T. Here, the time difference t2 between the specific instant of time T and the instant of time T-t2 indicates a time duration in which the receiving apparatus receives and analyzes the receiving control information for communication service information, and receives corresponding communication service information from a communication service information providing server ("the server") (not shown).

Also, the storage unit may further store the broadcast service information to be broadcast at the instant of time T-t2, which is matched to additional broadcast service information to be broadcast at the specific instant of time T. The additional broadcast service information is displayed together with the broadcast service information to be broadcast at the specific instant of time T when the corresponding communication service information is not provided from the server.

Further, the additional broadcast service information may be displayed together with the broadcast service information and communication service information to be broadcast at the specific instant of time T even when the corresponding communication service information is provided from the server.

Next, a broadcast service stream that contains the receiving control information for the communication service information received in operation S800 and the broadcast service information received in operation S810 is generated (S820). The broadcast service information received in operation S820 is displayed at the instant of time T-t2, and the receiving control information for the communication service information also received in operation S820 is related to the communication service information to be serviced in association with the broadcast service information displayed at the instant of time T. That is, the receiving control information for the communication service information is provided in the form of a broadcast service stream together with the broadcast service information broadcast a predetermined time earlier than (at the instant of time T-t2) the broadcast service information to be broadcast at the specific instant of time T.

The generation of the broadcast service stream in operation S820 further includes encoding the broadcast service information and the receiving control information for the communication service information in a format corresponding to the broadcast service, packetizing the encoded results, and multiplexing the packetized broadcast service stream.

Next, broadcast service configuration information indicating that the broadcast and communication combined service will be provided, is generated (S830). That is, in operation S830, the broadcast service configuration information including a message informing the receiving apparatus that a currently provided broadcast service is the broadcast and communication combined service is generated. More specifically, the broadcast service configuration information indicates that the currently provided service is the broadcast and communication combined service via an FIC in the case of DAB and via PSI/SI in the case of DVB-T.

Next, the broadcast service stream generated in operation S820 and the broadcast service configuration information generated in operation S830 are received and multiplexed into a broadcast signal (S840).

Next, the broadcast signal multiplexed in operation S840 is received and channel-encoded (S850).

Next, the broadcast signal channel-encoded in operation S850 is received and transmitted to the receiving apparatus via an antenna (S860). In operation S860, at least one broadcast signal can be transmitted via a broadcast network. The receiving apparatus receiving the channel-encoded broadcast signal in operation S860 may be one of a fixed type receiving apparatus, a hand-held type receiving apparatus, and a portable type receiving apparatus.

Although not described here, the descriptions explained above with reference to Figures 2 through 7 can also be applied to the method of Figure 8.

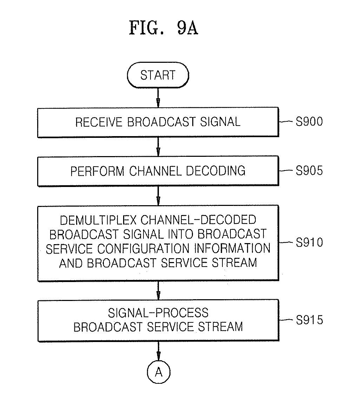

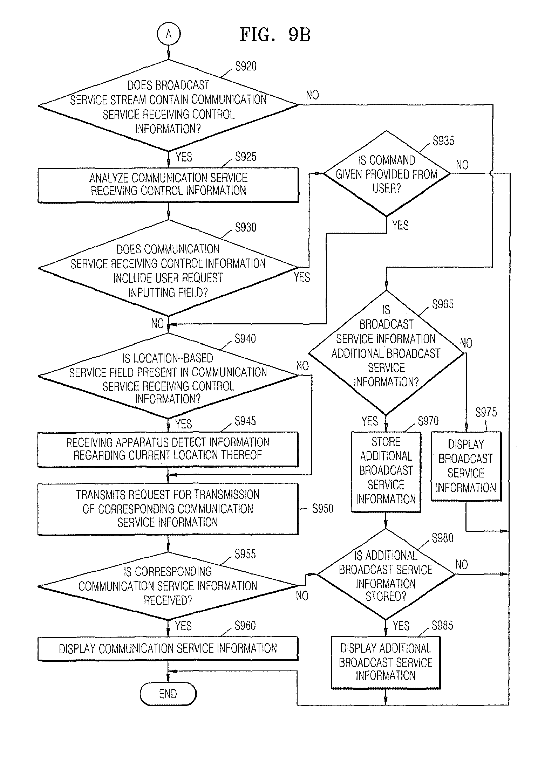

Figures 9A and 9B are flowcharts illustrating a method of receiving broadcast and communication combined service information according to an exemplary embodiment of the present invention. In Figures 9A and 9B, examples of broadcast service information and communication service information described include a moving picture broadcast that provides audio and video, audio/video streaming, a multimedia data file, a web service, traffic information, a news service, a stock service, an Electronic Program Guide (EPG), and an Electronic Services Guide (ESG).

Referring to Figure 9A, first, a broadcast and communication combined service information receiving apparatus ("the receiving apparatus") receives a broadcast signal from a broadcast and communication combined service information transmitting apparatus ("the transmitting apparatus") via a broadcast network (S900).

Next, the receiving apparatus channel-decodes the broadcast signal received in operation S900 (S905).

Next, the receiving apparatus demultiplexes the broadcast signal channel-decoded in operation S905 into broadcast service configuration information and a broadcast service stream (S910).

Next, the receiving apparatus signal-processes the broadcast service stream demultiplexed in operation S910 (S915).

Next, referring to Figure 9B, the receiving apparatus determines whether the result of signal-processing in operation S915 indicates that the broadcast service stream contains communication service receiving control information (S920). If it is determined in operation S920 that the broadcast service stream contains communication service receiving control information, the method proceeds to operation S925. If it is determined in operation S920 that the broadcast service stream does not contain communication service receiving control information, that is, it contains only broadcast service information, the method proceeds to operation S965.

In operation S925, the receiving apparatus analyzes the communication service receiving control information.

Next, the receiving apparatus determines whether the analysis result in operation S925 shows that the communication service receiving control information includes a user request inputting field (S930).

If it is determined in operation S930 that the communication service receiving control information does not include a user request inputting field, the method proceeds to operation S940. If it is determined in operation S930 that the communication service receiving control information includes a user request inputting field, the method proceeds to operation S935, and then, it is determined whether a command that instructs communication service information to be received is provided from a user. The command that instructs the communication service information to be received may be provided via a user interface unit.

If it is determined in operation S935 that the command that instructs the communication service information to be received is provided from the user, the method proceeds to operation S940. If not, the method is terminated.

In operation S940, it is determined whether a result of analyzing the communication service receiving control information reveals that a location-based service field is present in the communication service receiving control information.

If it is determined in operation S940 that a location-based service field is present, the method proceeds to operation S945. In operation S945, the receiving apparatus detects information regarding the current location thereof, and then the method proceeds to operation S950. If it is determined in operation S940 that a location-based service field is not present, the method proceeds directly to operation S950.

In operation S950, the receiving apparatus transmits a request for transmission of corresponding communication service information to a communication service information providing server ("the server"). If operation S950 is performed after operation S945, the information regarding the current location is transmitted along with the request for transmission of the corresponding communication service information to the server so as to receive location-based communication service information.

Next, it is determined whether the corresponding communication service information is received from the server via a communication network (S955). If it is determined in operation S955 that the communication service information is received, the method proceeds to operation S960, and the communication service information is displayed. If it is determined in operation S955 that the communication service information is not received, the method proceeds to operation S980.

In operation S965, it is determined whether the broadcast service information is additional broadcast service information to be displayed after a predetermined time, or broadcast service information to be displayed without a delay. If it is determined in operation S965 that the broadcast service information is the additional broadcast service information, the method proceeds to operation S970, and the additional broadcast service information is stored. If it is determined in operation S965 that the broadcast service information is not the additional broadcast service information, the method proceeds to operation S975 and the broadcast service information is displayed.

In operation S980, it is determined whether the additional broadcast service information is stored. If it is determined in operation S980 that the additional broadcast service information is stored, the method proceeds to operation S985 and the additional broadcast service information is displayed. If it is determined in operation S980 that the additional broadcast service information is not stored, the method is terminated.

Here, the communication service information, the broadcast service information, and the additional broadcast service information are synchronized with one another and the synchronized results are displayed in operations S960, S975, and S985, respectively. The broadcast signal transmitted from the transmitting apparatus contains receiving control information for communication service to be serviced in association with broadcast service information that is to be broadcast at a specific instant of time, together with broadcast service information to be broadcast before the specific instant of time. Therefore, the communication service information, the broadcast service information, and the additional broadcast service information can be displayed together with their related information without a delay in operations S960 S975, and S985, respectively.

Although not described here, the descriptions explained above with reference to Figures 2 through 7 can also be applied to the method of Figures 9A and 9B.

The above methods according to the present invention can be embodied as computer readable code in a computer readable medium. Here, the computer readable medium may be any recording apparatus capable of storing data that is read by a computer system, e.g., a read-only memory (ROM), a random access memory (RAM), a compact disc (CD)-ROM, a magnetic tape, a floppy disk, an optical data storage device, and so on. Also, the computer readable medium may be a carrier wave that transmits data via the Internet, for example. The computer readable medium can be distributed among computer systems that are interconnected through a network, and the present invention may be stored and implemented as a computer readable code in the distributed system. A functional program, code, and code segments necessary to perform the above methods according to the present invention can easily be derived by programmers in the technical field to which the present invention pertains.

In a method and apparatus for transmitting and receiving broadcast and communication combined service information according to the present invention, a user is provided with communication service information in synchronization with basic broadcast service information, thereby allowing the user to use a new broadcast and communication combined service while viewing broadcast service information without inputting a request for the communication service.

Also, according to the present invention, it is possible to provide a location-based broadcast and communication combined service in synchronization with broadcast service information, based on location information of a receiving apparatus.

Also, according to the present invention, a provider who provides broadcast and communication combined services can provide various and novel broadcast and communication combined services, such as preferential content for a broadcast and communication combined service, and a location-based service.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of transmitting broadcast and communication combined service information, the method comprising:
(a) generating a broadcast service stream comprising receiving control information (201, 301, 401), for communication service information (204, 404) to be serviced in association with broadcast service information (205, 305, 405) which is to be broadcast at a predetermined instant of time, together with broadcast service information (200, 300, 400) to be broadcast before the predetermined instant of time;
(b) generating broadcast service configuration information comprising a message indicating that the generated broadcast service stream provides a broadcast and communication combined service; and
(c) multiplexing the generated broadcast service stream and the generated broadcast service configuration information into a broadcast signal, and transmitting the broadcast signal.

2. The method of claim 1, wherein the step (a) comprises:
(a1) receiving the receiving control information (201, 301, 401) and the broadcast service information (200, 300, 400); and
(a2) generating a broadcast service stream by signal-processing the received receiving control information (201, 301, 401) and the broadcast service information (200, 300, 400).

3. The method of claim 2, wherein the signal processing in the step (a2) comprises encoding the received receiving control information (201, 301, 401) and the broadcast service information (200, 300, 400) in a format of a broadcast service.

4. The method of claim 3, wherein the signal processing in the step (a2) further comprises errorcorrection coding the received receiving control information (201, 301, 401) and the broadcast service information (200, 300, 400).

5. The method of claim 1, wherein the step (c) comprises:
(c1) multiplexing the broadcast service stream generated in (a) and the broadcast service configuration information generated in (b) into the broadcast signal;
(c2) channel-encoding the multiplexed broadcast signal; and
(c3) transmitting the channel-encoded broadcast signal in a form of a broadcast transmission frame.

6. The method of any preceding claim, wherein the broadcast signal further comprises additional broadcast service information (303, 403) to be serviced in association with the broadcast service information (305, 405) when the communication service information (204, 404) is not provided.

7. The method of any preceding claim, wherein the receiving control information (201, 301, 401) for the communication service information (204, 404) comprises information indicating whether a location-based communication service is to be performed.

8. The method of any preceding claim, wherein the receiving control information (201, 301, 401) for the communication service information (204, 404) comprises location information of a server which provides the communication service information.

9. A method of receiving broadcast and communication combined service information, the method comprising:
(a) receiving a broadcast signal comprising receiving control information (201, 301, 401), for communication service information (204, 404) to be serviced in association with broadcast service information (205,305,405) which is to be broadcast at a predetermined instant of time, together with broadcast service information (200, 300, 400) to be broadcast before the predetermined instant of time;
b) analyzing the receiving control information (201, 301, 401) for the communication service information (204, 404), which is comprised in the received broadcast signal, and requesting and receiving communication service information (204, 404) corresponding to a result of the analyzing; and
(c) receiving a broadcast signal comprising the broadcast service information (205, 305, 405), synchronizing the received broadcast service information (205, 305, 405) with the communication service information (204, 404) received in (b), and displaying a result of the synchronizing.

10. The method of claim 9, wherein the broadcast signal further comprises additional broadcast service information (303, 403) to be serviced in association with the broadcast service information (305, 405) when corresponding communication service information (204, 404) is not received.

11. The method of claim 10, wherein when the corresponding communication service information (204, 404) is not received in (b), (c) comprises receiving the broadcast signal, synchronizing the received broadcast service information (205, 305, 405) with the additional broadcast service information (303, 403), and displaying a result of the synchronizing.

12. The method of claim 10, wherein when the corresponding communication service information (204, 404) is received in (b), (c) comprises receiving the broadcast signal, synchronizing the received broadcast service information (205, 305, 405) with the communication service information (204, 404) and the additional broadcast service information (303, 403), and displaying a result of the synchronizing.

13. The method of any of claims 9 to 12, wherein (b) comprises:
(b1) analyzing the receiving control information (201, 301, 401);
(b2) determining whether the communication service information (204, 404) corresponding to the result of the analyzing is to be received; and
(b3) when it is determined that the communication service information (204, 404) corresponding to the result of the analyzing is to be received, receiving the corresponding communication service information (204, 404).

14. The method of claim 13, wherein when the result of the analyzing in (b1) reveals that the communication service information (204, 404) is to be charged in units of packets, (b2) is performed; and
when the analysis result in (b1) reveals that the communication service information (204, 404) is to be charged at a flat rate, the communication service information (204, 404) corresponding to the analysis result is received by performing (b3) while skipping (b2).

15. The method of claim 13, wherein the receiving control information (201, 301, 401) comprises a user request inputting flag, and
wherein when the user request inputting flag is present, (b2) comprises determining that the communication service information (204, 404) is to be received.

16. The method of claim 9, wherein (b) comprises:
(b1) analyzing the receiving control information (201, 301, 401);
(b2) detecting information regarding a location of a receiving apparatus when the result of the analyzing reveals that regional communication service information is to be provided; and
(b3) receiving the regional communication service information corresponding to the result of the analyzing, based on the location information detected in (b2).

17. The method of claim 16, wherein the location information is detected based on at least one of:
identifier information regarding a transmission repeater which transmits the broadcast signal;
identifier information regarding a communication base station which transmits the communication service information; and
global positioning system information.

18. The method of claim 16 and 17, wherein (b3) comprises:
(b31) determining whether the location of the receiving apparatus is changed to cause a handover while receiving the regional communication service information;
(b32) when it is determined that a handover does not occur, receiving regional communication service information corresponding to the result of the analyzing;
(b33) when it is determined that a handover occurs, determining whether sufficient time is provided to receive regional communication service information relating to a region where the handover occurs;
(b34) when it is determined in (b33) that sufficient time is provided, receiving the regional communication service information relating to the region where the handover occurs; and
(b35) when it is determined in (b33) that sufficient time is not provided, receiving regional communication service information being transmitted before the handover.

19. The method of any of claims 9 to 18, wherein the receiving control information comprises receiving location information using a multimedia data presentation when the communication service information is moving picture service information providing audio and video.

20. The method of any of claims 9 to 19, wherein the receiving control information comprises receiving location information allowing the communication service information to be received via a Uniform Resource Locator when the communication service information is service information using HyperText Markup Language or extensible Markup Language.

21. The method of any of claims 9 to 20, wherein the receiving control information comprises receiving location information in a form of a user data field when the communication service information uses a Moving Pictures Expert Group (MPEG) MPEG-2_ transmission stream.

22. The method of any of claims 9 to 21, wherein the receiving control information comprises receiving location information in a form of an internet protocol address when the communication service information uses an internet protocol.

23. The method of any of claims 9 to 22, wherein the receiving control information comprises an identifier for a server providing the communication service information.

24. The method of any of claims 9 to 23, wherein when the broadcast service information is digital audio broadcast service information, the analyzing of the receiving control information in (b) is a fast information channel analysis of digital audio broadcasting.

25. The method of any of claims 9 to 24, wherein when the broadcast service information is digital video broadcast service information, the analyzing of the receiving control information in (b) is program specific information of digital video broadcasting, service information analysis of digital video broadcasting, or program specific information and service information analysis of digital video broadcasting.

26. A method of receiving broadcast and communication combined service information, the method comprising:
(a) receiving a broadcast signal comprising an additional broadcast service (204, 404), which is to be serviced in association with broadcast service information (205, 305, 405) which is to be broadcast at a specific instant of time, together with broadcast service information (200, 300, 400) to be broadcast before the specific instant of time; and
(b) receiving a broadcast signal comprising the broadcast service information (205, 305, 405) to be broadcast at the specific instant of time, synchronizing the broadcast service information (205, 305, 405) with the additional broadcast service information (204, 404), and displaying a result of the synchronizing.

27. An apparatus for transmitting broadcast and communication combined service information, the apparatus comprising:
a broadcast service stream processor (530) which generates a broadcast service stream comprising receiving control information, for communication service information to be serviced in association with broadcast service information which is to be broadcast at a specific instant of time, together with broadcast service information to be broadcast before the specific instant of time;
a broadcast service configuration information processor (540) which generates broadcast service configuration information indicating that the generated broadcast service stream provides a broadcast and communication combined service; and
a multiplexer (550) which multiplexes the broadcast service stream and the broadcast service configuration information into a broadcast signal.

28. The apparatus of claim 27, further comprising a transmitter (570) which transmits the multiplexed broadcast signal in a form of a broadcast transmission frame.

29. The apparatus of claim 27 or 28, further comprising a channel encoder (560) which receives and channel-encodes the multiplexed broadcast signal from the multiplexer and which provides the channel-encoded broadcast signal to the transmitter.

30. The apparatus of claim 27, 28 or 29, further comprising a storage unit (510) which stores the receiving control information and the broadcast service information;
wherein the receiving control information is matched to the broadcast service information to be broadcast before the specific instant of time.

31. The apparatus of claim 30, further comprising a user interface unit (520) which provides a user interface regarding whether broadcast and communication combined service information is to be transmitted by providing the broadcast service stream processor with the broadcast service information and the receiving control information.

32. An apparatus for receiving broadcast and communication combined service information, the apparatus comprising:
a receiver (600) which receives a first broadcast signal and a second broadcast signal, wherein the first broadcast signal comprises receiving control information, for communication service information to be serviced in association with broadcast service information which is to be broadcast at a specific instant of time, and broadcast service information to be broadcast before the specific instant of time, and wherein the second broadcast signal comprises the broadcast service information to be broadcast at the specific instant of time;
a broadcast service stream processor (640) which signal-processes the first and second broadcast signals, wherein the broadcast service information and communication service receiving control information are extracted from the first broadcast signal;
a communication service receiving control information processor (650) which analyzes the communication service receiving control information received from the broadcast service stream processor, and which receives communication service information corresponding to the analyzed result; and
a display unit (660) which receives the broadcast service information from the broadcast service stream processor, which synchronizes the received broadcast service information with communication service information received from the communication service receiving control information processor, and which displays the synchronized result.

33. The apparatus of claim 32, further comprising a channel decoder (610) which performs channel decoding on the first and second broadcast signals from the receiver, and which transmits the channel-decoded broadcast signals to the broadcast service stream processor.

34. The apparatus of claim 32, wherein the communication service receiving control information processor (650) comprises:
a communication service receiving control information analysis unit (652) which analyzes the communication service receiving control information to obtain location information of a communication service information providing server which provides desired communication service information;
a communication service information requesting unit (654) which requests the communication service information providing server to transmit the desired communication service information; and
a communication service information receiving unit (656) which receives the desired communication service information from the communication service information providing server.

35. The apparatus of claim 34, wherein the communication service receiving control information analysis unit (652) further analyzes whether the communication service receiving control information comprises a user request inputting field indicating that the communication service information is to be received when a user requests the communication service information, and displays on the display unit whether the communication service information is to be received when the user request inputting field is present.

36. The apparatus of claim 35, further comprising a user interface unit (670) which provides a user interface via which a command signal comprising the user's request is received.

37. The apparatus of claim 34, wherein the communication service receiving control information analysis unit (652) further analyzes whether the communication service receiving control information comprises a location-based service field indicating whether location-based communication service information is to be provided.

38. The apparatus of claim 37, further comprising a location information detecting unit (680) which detects information regarding a current location of the apparatus:
and
wherein the communication service receiving control information analysis unit (652) analyzes the detected location information and the location information of the communication service information providing server.
